# EUROPEAN PATENT SPECIFICATION

(11) **EP 1 729 102 B1**
(45) Date of publication and mention of the grant of the patent: **24.04.2019**
(21) Application number: 06010880.0
(22) Date of filing: 24.05.2006
(51) Int. Cl.: G01J 1/02, G01J 1/06, G01J 5/02, G01J 5/04, G01J 5/08, G01J 1/04

(54) **Detector with miniature optics for constant energy collection from different distances**
Detektor mit Miniaturoptik für konstante Energiesammlung aus verschiedenen Entfernungen
Détecteur avec optique miniature pour le recueil constant de l'énergie à partir de différentes distances

(30) Priority: 24.05.2005 EP 05011245
(43) Date of publication of application: 06.12.2006
(73) Proprietor: Gerlitz, Yonathan, Lev Hasharon 42835 (IL)
(72) Inventor: Gerlitz, Yonathan, Lev Hasharon 42835 (IL)
(74) Representative: Vossius & Partner Patentanwälte Rechtsanwälte mbB

(56) References cited:
- EP-A- 0 837 317
- WO-A-03/010521
- GB-A- 2 294 318
- JP-A- 2000 217 786
- US-A- 3 838 277
- US-A- 4 479 056
- US-A- 6 118 474
- US-A1- 2004 173 737
- US-B1- 6 324 016
- NORBERT SCHUSTER ET AL: "Telecentric large-field lenses using Fresnel optics", OPTICAL SENSING II, vol. 4567, 11 February 2002 (2002-02-11), pages 190-198, XP055326295, 1000 20th St. Bellingham WA 98225-6705 USA ISSN: 0277-786X, DOI: 10.1117/12.455256 ISBN: 978-1-62841-971-9

## Description

### Abstract

An apparatus consists of a light detector and optics, constructs to collect the same energy from the same area size on the target, when the target's distance from the detector is changeable.

### Background of the invention

In many measurement applications of light and infra-red light there is a requirement to measure the light energy emitted from a defined area size on the surface, but the distance to the target isn't known or is changing.

For example, an infra-red thermometer for remote measurement, where the measured area size on the measured surface should be constant, but the thermometer is hand-held so the distance is not defined and changes all the time.

JP 2000217786 A relates to a thermometer with a probe to be inserted in the external auditory canal, comprising a light-receiving part which receives infrared rays emitted from the eardrum.

### Summary of the invention

The invention is defined by the subject-matter of the independent claim.

The detector has an attached optics that create an enlarged real image of the sensitive surface of the detector in a defined distance.

Limiting aperture, its size and shape are exactly as the image size and shape, is imposed between the optics and the image. In paraxial assumption, any light ray arriving at the sensitive surface of the detector should be on a line originated from the image, and all the rays which are originated from the image and are passing through the limited aperture must hit the sensitive surface of the detector. No other light ray that is not originated from the image can hit the sensitive surface of the detector.

This creates an imaginary light tube which has the size of the limiting aperture (and the image) that continues between the limiting aperture and the image.

From any surface disposed between the aperture and the image, which has a uniform light energy emitting, the reading on the detector will be from the same area size and the same energy, undependable of the distance.

The repeatability of the measurements when changing the distance between the measured surface and the detector depends only on the optics, or the image quality or the optics aberrations.

### Brief description of the drawings

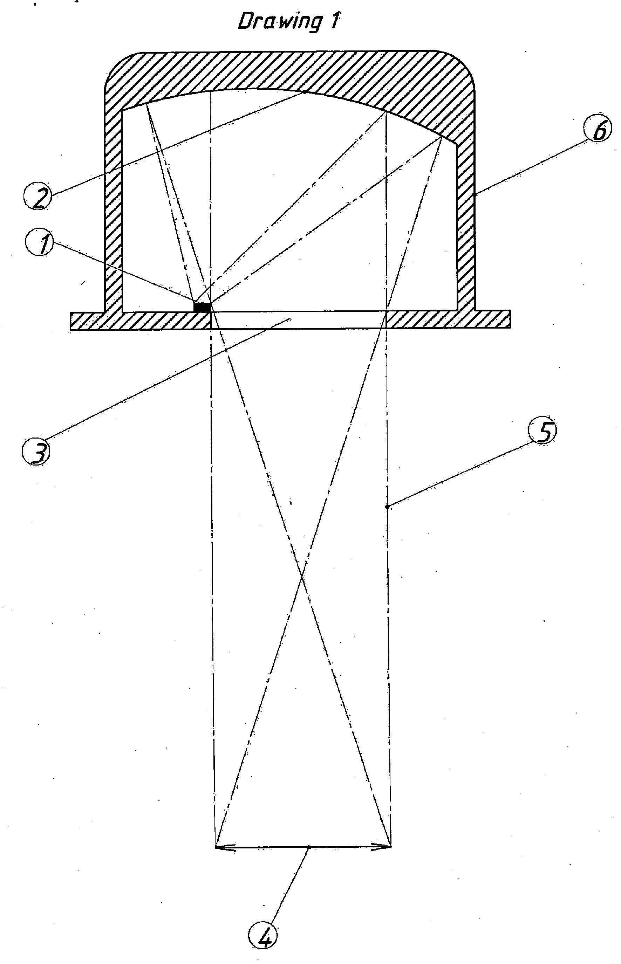

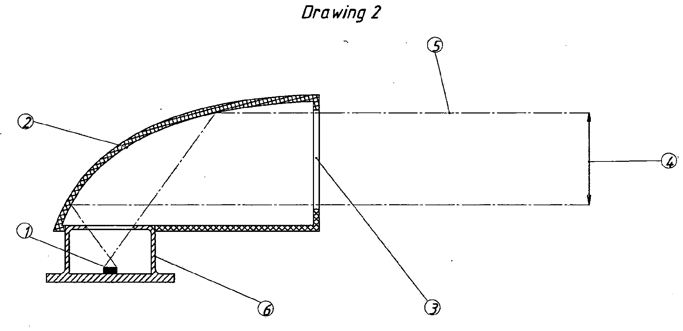

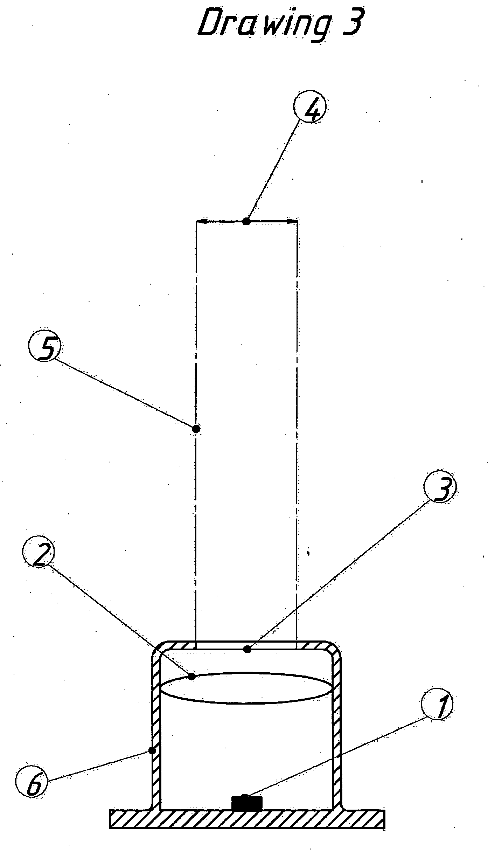

Drawings 1, 2 and 3 illustrate a possible detector and optics configurations in accordance with the preferred embodiments of this invention.

### Detailed description of the drawings

Reference is made to drawings 1, 2 and 3.
Drawing 1 shows the construction of detector 6 with optics mirror surface assembled within the detector case.

Drawing 2 illustrates detector 6 with a mirror optics attached externally to the detector.
Drawing 3 illustrates the construction of detector 6 with lens optics 2 within the detector case.
In all drawings optics 2 is assembled with reference to detector sensitive area 1 as to create a real image 4 of the sensitive surface 1.
Optics 2 can be of any kind, such as aspheric mirror, spherical mirror, simple lens or composite lens, depending on the accuracy required.
Aperture 3 disposed between the optics and the image, and has the same size and shape of the image, as to create imaginary light tube 5 that defines all the light rays which are emitted from the image 4 and hit at the sensitive surface 1. For any surface with uniform light energy emission, disposed between image 4 and aperture 3, the sensitive area will receive the same energy from the same area size. The area size is defined by the aperture or the sensitive surface image.
It should be made clear that the light includes all regions from UV, visible light and up to far infra-red thermal emission.

Although the invention has been described in terms of certain preferred embodiments, other embodiments that are apparent to those of ordinary skill in the art, including embodiments which do not provide all of the features and advantages set forth herein, are also within the scope of this invention. Accordingly, the scope of the invention is defined by the claims that follow.

## Claims

1. An apparatus for remote measuring of infra-red light comprising a detector (6), optics (2) and an aperture (3), wherein the optics create a real image (4) of the sensitive area of the detector (6) and the aperture (3), imposed between the optics (2) and the image (4) of the sensitive area, having the same size and shape of the image (4) of the sensitive area, said apparatus being adapted to substantially collect the same energy emitted from the same area size from a surface in different distances, wherein for any surface with uniform light energy emission, disposed between image (4) and aperture (3), the sensitive area will receive the same energy from the same area size, wherein the area size is defined by the aperture (3) or the sensitive surface image (4).

2. The apparatus of any one of the preceding claims, wherein the optics (2) are arranged within the detector housing.

3. The apparatus according to any one of the preceding claims, wherein the optics (2) is a reflecting, spherical or aspheric optics.

4. The apparatus of any one of claims 1 to 3, wherein the optics (2) comprises lenses.

## Patentansprüche

1. Vorrichtung zur Fernmessung von Infrarotlicht mit einem Detektor (6), einer Optik (2) und einer Blende (3), wobei die Optik ein reelles Bild (4) der Messfläche des Detektors (6) erzeugt und der Blende (3), welche zwischen der Optik (2) und dem Bild (4) der Messfläche ausgerichtet ist, die gleiche Größe und Form wie das Bild (4) der Messfläche hat, wobei die Vorrichtung dazu ausgebildet ist, im Wesentlichen die gleiche Energie zu sammeln, die von der gleichen Flächengröße von einer Oberfläche in unterschiedlichen Abständen abgestrahlt wird, wobei für jede Oberfläche mit gleichmäßiger Lichtenergieabstrahlung, die zwischen dem Bild (4) und der Blende (3) angeordnet ist, die Messfläche die gleiche Energie von der gleichen Flächengröße empfängt, wobei die Flächengröße durch die Blende (3) oder das Bild (4) der Messfläche definiert ist.

2. Vorrichtung nach dem vorstehenden Anspruch, wobei die Optik (2) im Detektorgehäuse angeordnet ist.

3. Vorrichtung nach einem der vorstehenden Ansprüche, wobei die Optik (2) eine Spiegel-, sphärische oder asphärische Optik ist.

4. Vorrichtung nach einem der Ansprüche 1 bis 3, wobei die Optik (2) Linsen aufweist.

## Revendications

1. Appareil de mesure à distance d'une lumière infrarouge comprenant un détecteur (6), un dispositif optique (2) et une ouverture (3), où le dispositif optique crée une image réelle (4) de la zone sensible du détecteur (6) et l'ouverture (3), imposée entre le dispositif optique (2) et l'image (4) de la zone sensible, présente les mêmes taille et forme de l'image (4) de la zone sensible, ledit appareil étant adapté pour recueillir sensiblement la même énergie émise par la même taille de zone à partir d'une surface à différentes distances, où, pour n'importe quelle surface avec une émission d'énergie lumineuse uniforme, disposée entre l'image (4) et l'ouverture (3), la zone sensible recevra la même énergie à partir de la même taille de zone, où la taille de zone est définie par l'ouverture (3) ou l'image de la surface sensible (4).

2. Appareil selon la revendication précédente, où le dispositif optique (2) est agencé dans le logement du détecteur.

3. Appareil selon l'une quelconque des revendications précédentes, où le dispositif optique (2) est un dispositif optique réfléchissant, sphérique ou asphérique.

4. Appareil selon l'une quelconque des revendications 1 à 3, où le dispositif optique (2) comprend des lentilles.
